# EUROPEAN PATENT APPLICATION

(11) **EP 4 302 870 A1**
(43) Date of publication of application: **10.01.2024**
(21) Application number: 21929193.7
(22) Date of filing: 30.11.2021
(51) Int. Cl.: B01J 19/08, C12M 1/00, C25F 3/14, G01N 27/00

(54) **PORE FORMING METHOD AND PORE FORMING APPARATUS**

(30) Priority: 03.03.2021 JP 2021033145
(71) Applicant: Hitachi, Ltd., Tokyo 100-8280 (JP)
(72) Inventor: YANAGI Itaru, Tokyo 100-8280 (JP); YANAGAWA Yoshimitsu, Tokyo 100-8280 (JP)
(74) Representative: MERH-IP Matias Erny Reichl Hoffmann Patentanwälte PartG mbB
(86) International application number: PCT/JP2021/043856
(87) International publication number: WO 2022/185635

(57) **Abstract**

Realized is a formation of a nanopore having a desired size (nanopore having a size.close to a size of a detection target) with high yields using the dielectric breakdown phenomenon. The present disclosure proposes, as an aspect, a pore forming method including disposing a membrane between a first electrolyte solution and a second electrolyte solution held in a chamber configuration, bringing a first electrode into contact with the first electrolyte solution and a second electrode into contact with the second electrolyte solution, outputting a first voltage from a voltage source to a circuit configured by disposing the voltage source and a resistor in a wiring connecting the first electrode and the second electrode, measuring a second voltage between the first electrode and the second electrode, detecting a significant change in the second voltage, and stopping output of the first voltage in response to detecting the significant change in the second voltage (see FIG. 5).

## Description

### Technical Field

The present disclosure relates to a pore forming method and a pore forming apparatus.

### Background Art

As a method for detecting molecules and particles present in an aqueous solution, a technique using a nanopore has been studied. In this technique, detection of passing of a detection target through the nanopore or grasp of the structural characteristics of the target is made. A pore (nanopore) is provided in a membrane, the pore having a similar size as the size of molecules or particles to be detected. An upper chamber and a lower chamber of the membrane are filled with an aqueous solution. Electrodes are provided in both chambers such that the electrodes contact the aqueous solution. The detection target is placed in one of the chambers. the detection target is electrophoresed with a potential difference between the electrodes provided in both chambers to allow the detection target to pass through the nanopore. A change with time of an ion current flowing between the both electrodes is measured.

Because of the high mechanical strength of nanopore devices and for other reasons, methods using a semiconductor substrate, a semiconductor material, and a semiconductor process have attracted attention as a method for manufacturing nanopore devices. For example, the membrane may be formed using a silicon nitride membrane (SiNx membrane). The pore having a diameter of 10 nm or less may be formed, with a transmission electron microscope (TEM) apparatus, by narrowing the irradiation area of the electron beam on the membrane to a small size and controlling the energy and current (NPL 1).

In addition, recently, new methods for forming the nanopore using the dielectric breakdown phenomenon of a membrane have been disclosed in PTL 1, NPL 2, NPL 3, and NPL 4. In their methods, first, an aqueous solution is filled in chambers on top and bottom of a SiNx membrane with no hole. Electrodes are immersed in the aqueous solutions in the upper and lower chambers. A high voltage is continuously applied between the electrodes. Then, when the current value between the electrodes rapidly increases (that is, the membrane undergoes dielectric breakdown) and reaches a prespecified cutoff current value, a determination is made that a desired nanopore is formed. Application of a high voltage is stopped, whereby the nanopore is formed. This nanopore forming method has an advantage that manufacturing cost and throughput are greatly reduced as compared with nanopore forming with a TEM apparatus. In addition, in this nanopore forming method, after the nanopore is formed in the membrane, a measurement of a detection target can be performed without removing the membrane from the chamber. Thus, there is an advantage that the nanopore is not exposed to a contaminant in the air, and noise at the time of measurement is reduced.

Determining the base sequence of DNA (DNA sequencing) has attracted attention as an application of measurement using the nanopore. It is a method of determining the sequence of four kinds of bases in a DNA chain by detecting a change in an ion current passing through a nanopore when DNA passes through the nanopore.

Another application of measurement using the nanopore is the detection and counting of specific objects in aqueous solutions. For example, in NPL 5, detecting and counting a DNA having a specific sequence are performed by following method: PNA and PEG are bound only to a DNA having a specific sequence present in an aqueous solution, and a change in ion current is measured when the DNA attached with PNA and PEG passes through a nanopore.

### Citation List

### Patent Literature

PTL 1: WO2013/167955 A1 (PCT/IB2013/000891)

### Non-Patent Literatures

NPL 1: Jacob K Rosenstein, et al., Nature Methods, Vol.9, No.5, 487-492 (2012)
NPL 2: Harold Kwok, et al., PloS ONE, Vol.9, No.3, e92880. (2013)
NPL 3: Kyle Briggs, et al., Nanotechnology, Vol.26, 084004 (2015)
NPL 4: Kyle Briggs, et al., Small, 10 (10) :2077-86 (2014)
NPL 5: Trevor J. Morin, et al., PLoS ONE 11(5) :e0154426. doi:10.1371/journal.pone.0154426
NPL 6: Itaru Yanagi, et al., Scientific Reports, 4, 5000 (2014)

### Summary of Invention

### Technical Problem

In the nanopore measurement as described above, the relationship between the size of the detection target and the size of the nanopore is important. Using a nanopore having a size as close as possible to the size of the detection target improves an S/N ratio (signal/noise ratio) of a signal (ion current change) generated when the detection target passes through the nanopore. Since the detection target have different sizes, it is necessary to accurately create nanopores of various sizes according to the sizes of the detection target to perform highly accurate measurement.

To date, when nanopores are formed in membranes using the dielectric breakdown phenomenon, there has been a problem that the nanopores to be formed have a large variation in size, often causing a large deviation from a desired size of the nanopore. Thus, in the measurement of a certain detection target, there is a low probability (yield) of forming nanopores having a size close to the size of the detection target.

The present disclosure has been made in view of such a situation. The present disclosure provides a technique for forming a nanopore of a desired size (a nanopore having a size close to the size of a detection target) with high yields using the dielectric breakdown phenomenon.

### Solution to Problem

To solve the above problem, the present disclosure proposes, as an aspect, a pore forming method including disposing a membrane between a first electrolyte solution and a second electrolyte solution held in a chamber configuration, bringing a first electrode into contact with the first electrolyte solution and a second electrode into contact with the second electrolyte solution, outputting a first voltage from a voltage source to a circuit configured by disposing the voltage source and a resistor in a wiring connecting the first electrode and the second electrode, measuring a second voltage between the first electrode and the second electrode, detecting a significant change in the second voltage, and stopping output of the first voltage in response to detecting the significant change in the second voltage.

The present disclosure also proposes, as another aspect, a pore forming method including disposing a membrane between a first electrolyte solution and a second electrolyte solution held in a chamber configuration, bringing a first electrode into contact with the first electrolyte solution and a second electrode into contact with the second electrolyte solution, outputting a first voltage from a voltage source to a circuit configured by disposing the voltage source, a capacitor, and a switch in a wiring connecting the first electrode and the second electrode, measuring a second voltage between the first electrode and the second electrode, detecting a significant change in the second voltage, and turning off the switch in response to detecting the significant change in the second voltage.

Other features related to the present disclosure will become apparent from the description of the present specification and the accompanying drawings. Aspects of the present disclosure are achieved and realized by elements, combinations of various elements, and aspects of the following detailed description and appended claims. The description of the present specification is merely a typical example and does not limit the scope of claims or application examples of the present disclosure in any sense.

### Advantageous Effects of Invention

The technique of the present disclosure can achieve highly accurate nanopore forming.

### Brief Description of Drawings

FIG. 1 is a diagram illustrating a configuration example of a pore forming apparatus 1 according to Comparative Example.
FIG. 2 is a diagram illustrating a configuration example of the pore forming apparatus 1 including a support substrate 112 according to Comparative Example.
FIG. 3 is a diagram for describing a nanopore forming method according to Comparative Example. It is a diagram for describing a comparison technique in Example 1.
FIG. 4A is a diagram showing a time trace of a current between electrodes during application of a voltage V1 = 18 V.
FIG. 4B is a graph showing diameters of nanopores formed when nanopore forming is performed five times under the same experimental conditions (membrane 101: 20 nm-thick SiN membrane, application voltage V1: 18 V, threshold current value Ith: 300 nA).
FIG. 5 is a diagram illustrating a pore forming apparatus 10 (setup) according to a first embodiment.
FIG. 6 is a flowchart for describing an example of pore forming operation according to the first embodiment.
FIG. 7 is a flowchart for describing another example of pore forming operation according to the first embodiment.
FIG. 8 is a diagram showing a time trace of an output voltage from a voltage source 300 and a time trace of a voltage applied to the membrane 101 (that is, a voltage measured by a voltmeter 302) when pore forming according to the first embodiment is performed.
FIG. 9 is a diagram showing a time trace of the output voltage from the voltage source 300, a time trace of the voltage applied to the membrane 101, and a time trace of a change rate of the voltage in a case where a control to stop the voltage application from the voltage source 300 is executed when the change rate of the voltage applied to the membrane 101 has a value more than or equal to a predetermined threshold.
FIG. 10A is a diagram showing experimental results with a threshold voltage set to Vth = 8 V and a resistance set to R1 = 5 MΩ.
FIG. 10B is an enlarged view of FIG. 10A in the vicinity of the time when the voltage reaches the threshold voltage Vth.
FIG. 10C is a TEM photograph of a nanopore formed in Example 1.
FIG. 11A is a graph showing diameters of nanopores formed when nanopore forming is performed six times in Example 2.
FIG. 11B is a diagram showing a resistance R1 dependence of the diameter of formed nanopores.
FIG. 11C is a diagram showing a threshold voltage Vth dependence of the diameter of formed nanopores.
FIG. 12 is a diagram illustrating a configuration example of a pore forming apparatus 20 (setup) according to a second embodiment.
FIG. 13 is a flowchart for describing an example of pore forming operation according to the second embodiment.
FIG. 14 is a flowchart for describing another example of pore forming operation according to the second embodiment.
FIG. 15 is a diagram showing a time trace of ON/OFF timing of a switch 304 when performing pore forming according to the second embodiment.
FIG. 16 is a diagram showing a time trace of an ON/OFF timing of the switch 304, a time trace of the voltage applied to the membrane 101, and a time trace of a change rate of the voltage when turning off the switch 304 at the time of the change rate of the voltage applied to the membrane 101 has a value more than or equal to a predetermined threshold (when the nanopore forming technique according to the present embodiment is performed).
FIG. 17A is a diagram showing results with the threshold voltage set to Vth = 0.1 V and a capacitance of a capacitor set to C1 = 33 nF.
FIG. 17B is an enlarged view of FIG. 17A in the vicinity of the time when the voltage reaches the threshold voltage Vth.
FIG. 17C is a TEM photograph of a nanopore formed in Example 3.
FIG. 18A is a graph showing diameters of nanopores formed when nanopore forming is performed seven times in Example 4.
FIG. 18B shows a capacitance C1 dependence of the diameter of nanopores formed in Example 4.
FIG. 19 is a diagram illustrating a configuration example of a pore forming system used in the first and second embodiments.

### Description of Embodiments

The embodiments relate to a technique for forming pores (for example, nanopores) in membranes without causing excessive variations in size. In the accompanying drawings in the embodiments, components having the same functions are denoted by the same reference numerals, and repeated description thereof is omitted as much as possible. Hereinafter, the embodiments will be described in detail with reference to the drawings. The device structures and materials described in Examples are examples for embodying the technical idea of the present disclosure and do not strictly specify materials, dimensions, or the like. Specific voltage values, current values, and voltage application times described in Examples are examples for embodying the present technical idea and do not strictly specify them. Hereinafter, first, Comparative Example (detection of nanopore forming through monitoring of a current value between membranes) will be described. Then each embodiment will be described together with Examples.

### (1) Comparative Example

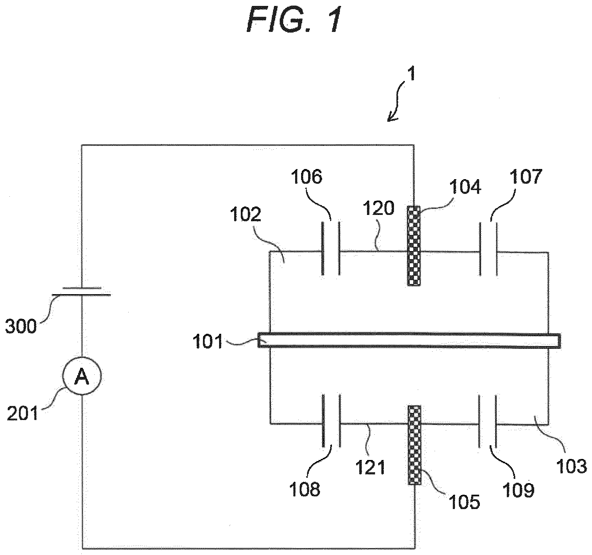

First, a nanopore forming method using dielectric breakdown of Comparative Example and problems thereof will be described in detail. The method of Comparative Example is a method disclosed in NPLs 2 to 4. In the description of Comparative Example, an apparatus configuration (setup) as illustrated in FIG. 1 will be considered as an example.

### <Configuration Example of Pore Forming Apparatus 1 According to Comparative Example>

FIG. 1 is a diagram illustrating a configuration example of a pore forming apparatus 1 according to Comparative Example. In the pore forming apparatus 1, a membrane 101 separates an aqueous solution into aqueous solutions 102 and 103. When the aqueous solution is put into each of chambers 120 and 121, the aqueous solution is put into each chamber by using solution inlets or solution outlets 106, 107, 108, and 109. Electrodes 104 and 105 are in contact with the solutions in the chambers, respectively. The electrodes are connected to an ammeter 201 and a voltage source 300. The voltage source 300 can apply any voltage between the electrodes. The ammeter 201 can measure the current between the electrodes. By controlling the present circuit using a control unit, such as a PC or a dedicated control unit, which is not illustrated in the drawing, can record measured current value and change the application voltage based on information of measured current value.

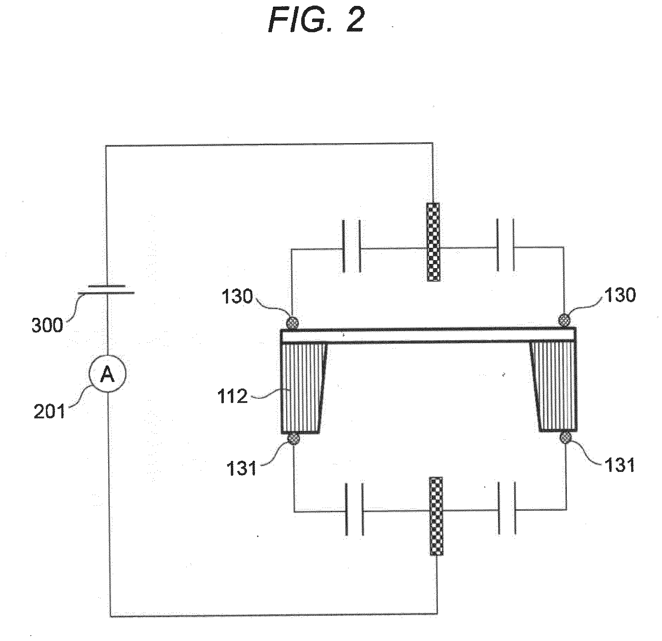

In practice, in many cases, the membrane 101 is supported by a support substrate 112 as illustrated in FIG. 2. Further, sealing materials 130 and 131 (e.g., o-ring) are disposed between the support substrate and the chambers to prevent leaking of the liquid in the chambers in many cases. However, a simplified diagram as illustrated in FIG. 1 is used in the present specification to simplify the description. For example, Ag/AgCl electrodes may be used as the electrodes 104 and 105. A silicon nitride membrane (SiN membrane) having a thickness of 3 to 30 nm may be used as the membrane 101. An aqueous solution in which KCl is dissolved may be used as the solutions 102 and 103. The material of the support substrate 112 is silicon (Si), for example.

### <Nanopore Forming Method According to Comparative Example and Problems Thereof>

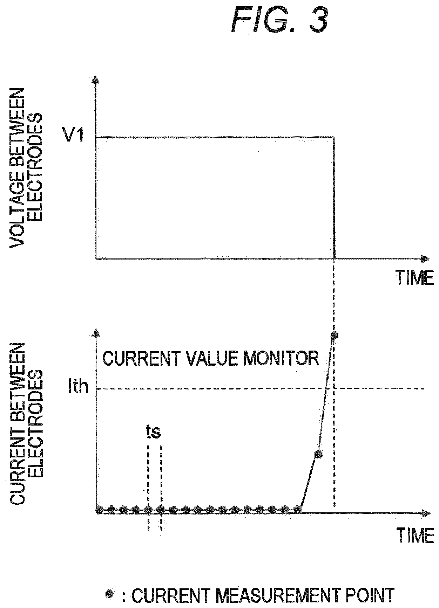

FIG. 3 is a diagram for describing a nanopore forming method according to Comparative Example. The method in Comparative Example is used when it is desired to create a nanopore having such a size that the magnitude of the current value between the electrodes becomes about a threshold current value Ith with application of a voltage V1. In the procedure, a constant voltage V1 is applied between the electrodes using the voltage source 300. The current flowing between the electrodes at that time is monitored by the ammeter 201. The voltage application between the electrodes is stopped when the magnitude of the measured current value matches or exceeds the threshold current value Ith. The current value cannot be measured in a completely continuous manner. Thus, the measurement value is recorded at every sampling interval ts. The recorded measurement values are indicated by black dots in the diagram. The measurement value rises sharply at a certain time. This time point is a time point at which the membrane 101 undergoes dielectric breakdown and a fine pore is generated in the membrane 101. The voltage V1 is continuously applied to the membrane after that. The application of the voltage between the electrodes is stopped when the measurement value matches or exceeds the threshold current value Ith. Performing such a procedure enables the nanopore to form with which a current value having a magnitude of about the threshold current value Ith flows with application of the voltage V1. As described above, the current value cannot be measured in a completely continuous manner (measured discretely on the time axis), thereby the value is measured at every certain sampling interval ts. For this reason, the magnitude of the measurement value at a certain sampling point and the threshold current value Ith do not completely match with each other, and the application of the voltage is stopped when the measured (recorded) current value exceeds the threshold current value Ith in practice. In addition, it takes some time for the control unit to determine whether the magnitude of the measured current value exceeds the threshold current value Ith. Further, when the control unit determines that the magnitude of the measured current value exceeds the threshold current value Ith, it also takes some time to stop the voltage application between the electrodes.

That is, in the method according to Comparative Example, the voltage V1 continues to be applied to the membrane for a certain period even after the current value flowing between the electrodes reaches the threshold current value Ith, and the size of the pore continues to increase during that period. The pore is expanded by Joule heat (current passing through the pore × application voltage) . As the size of the pore increases, the current value flowing when the voltage V1 is applied also increases, and the Joule heat also increases. As the Joule heat increases, the speed at which the pore size increases further increases. In this manner, in Comparative Example, the voltage V1 is continuously applied to the membrane for a certain period even after the current value flowing between the electrodes reaches the threshold current value Ith, and the pore size expands in an accelerated manner during that period. Thus, in this method, although it is desired to form a pore having such a size that the current Ith flows with the voltage V1, a pore much larger than that is formed in practice.

As described above, in Comparative Example, the voltage V1 continues to be applied to the membrane for a certain period even after the current value flowing between the electrodes reaches the threshold current value Ith, and during that period, high Joule heat, is continuously generated. It is different for each membrane how much the pore size is increased by this high Joule heat (different each time even when using membranes of the same material and the same membrane thickness). Sometimes, the size expands significantly at once, and sometimes, the size does not expand significantly at once. Thus, the variation in size of the formed pores also increases.

### <Experimental Result According to Comparative Example>

Next, a result of forming nanopores in practice in Comparative Example will be described. In this experiment, a SiN membrane having a thickness of 20 nm was used as the membrane 101. The application voltage V1 was set to 18 V. The threshold current value Ith was set to 300 nA. A KCl aqueous solution with a concentration of 1M was used as the aqueous solutions 102 and 103.

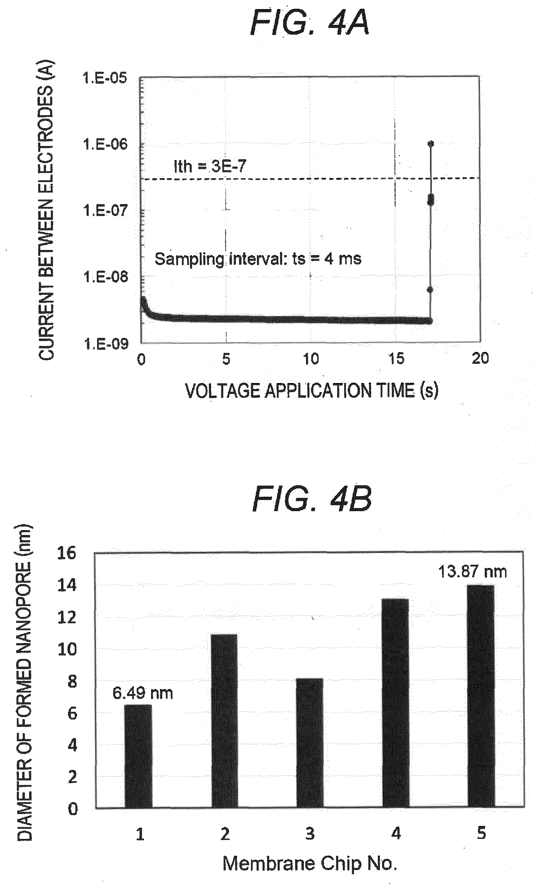

FIG. 4A is a diagram showing a time trace of a current between electrodes during application of a voltage V1 = 18 V. As shown in FIG. 4A, the current value between electrodes rapidly increases about 17 seconds after the start of voltage application. When the measurement point of the current value between electrodes exceeded the threshold current value Ith = 300 nA, the application of the voltage V1 = 18 V was completed. As seen from FIG. 4A, the last measured current value between electrodes considerably exceeded the threshold current value Ith = 300 nA. It is different for each membrane how much the last measured current value between electrodes exceeds the threshold - current value Ith (different each time even when using membranes having the same material and the same membrane thickness). This leads to variations in the diameter of formed pores.

FIG. 4B is a graph showing diameters of nanopores formed when nanopore forming is performed five times under the same experimental conditions (membrane 101: 20 nm-thick SiN membrane, application voltage V1: 18 V, threshold current value Ith: 300 nA). The diameters of the nanopores were determined by TEM observation of the formed nanopores. Since the formed nanopores are not perfect circles, the diameter thereof was calculated as follows. First, the area S of a nanopore was measured from the TEM image of the formed nanopore. Next, assuming that the nanopore is a perfect circle, the diameter d was calculated from the formula of diameter d = 2 × (S/n) ^ (1/2). As seen from the diagram, as a result of conducting the experiment five times, the minimum of the formed nanopore diameter was 6.49 nm and the maximum was 13.87 nm. It was confirmed that the variation was large.

As seen from this result, according to Comparative Example, the variation in the diameter of formed nanopores is large, and the variation cannot be kept small.

Thus, the presentdisclosure proposes a technique capable of keeping the variation in the diameter smaller. Hereinafter, each embodiment will be described.

### (2) First Embodiment

### <Configuration Example of Pore Forming Apparatus 10>

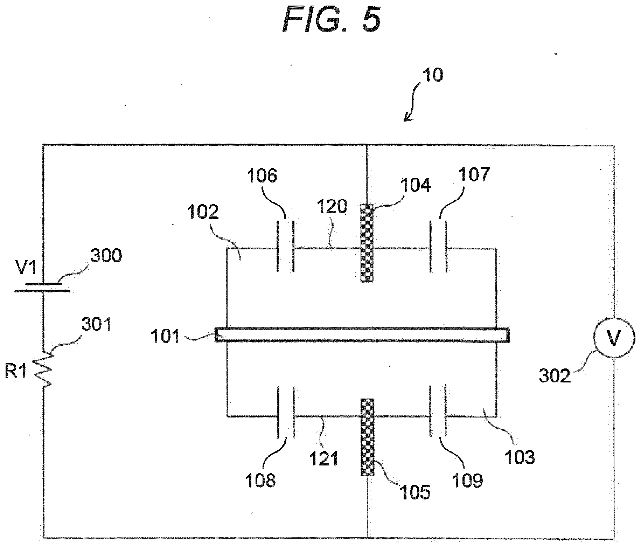

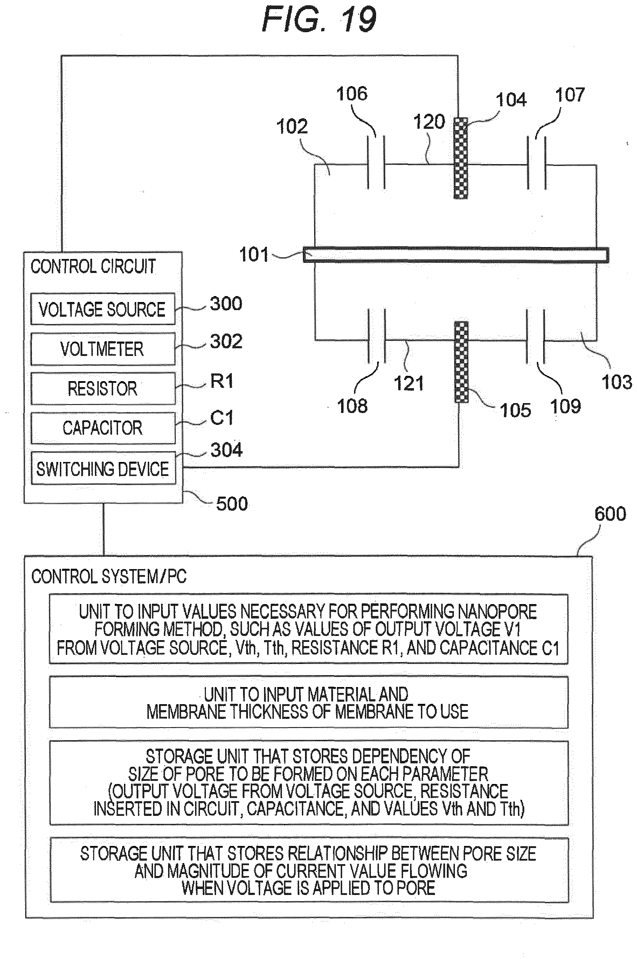

FIG. 5 is a diagram illustrating a pore forming apparatus 10 (setup) according to a first embodiment. In FIG. 5, a voltage source 300 and a resistor (R1) 301 are arranged in series in a wiring connecting both electrodes 104 and 105. A voltmeter 302 is disposed to measure the voltage between the electrodes (voltage applied to the membrane). It is possible to record a measured voltage value and change the application voltage based on information of the measured voltage value by controlling this circuit. This circuit may be controlled, for example, by using a control unit, such as a PC, or a dedicated control circuit or control unit, which are not illustrated in drawings (see the configuration example of the pore forming system in FIG. 19) .

The pore forming apparatus 1 according to Comparative Example measures the current flowing through the membrane 101 to detect pore formation. In contrast, in the pore forming apparatus 10 according to the first embodiment, the resistor R1_301 is provided between the membrane 101 and the voltage source 300 to measure the voltage applied to the membrane 101. Even when measuring the voltage applied to the membrane 101 in the pore forming apparatus 1 of Comparative Example, the change in the voltage cannot be measured. This is because the resistor R1 is not provided. The reason will be described in more detail below. Since a current cannot flow through the membrane until a pore is formed in the membrane, the resistance of the membrane can be regarded as ∞ Ω. Thus, the resistance of the membrane is of course overwhelmingly larger than the resistance of the solution and the resistance of the wiring. Accordingly, the voltage (V1) applied from the voltage source 300 is applied to the membrane almost as it is with almost no voltage drop at positions other than the membrane. In addition, even after a nano-sized pore is formed in the membrane, the resistance of the current value passing through the pore is still overwhelmingly larger than the resistance of the solution and the resistance of the wiring. Thus, even after the pore is formed in the membrane, the voltage (V1) applied from the voltage source 300 is applied to the membrane (pore) almost as it is with almost no voltage drop at positions other than the membrane (pore). Accordingly, even when measuring the voltage applied to the membrane 101 in the pore forming apparatus 1 of Comparative Example, it is not possible to measure a significant change in the voltage before and after the pore formation. On the other hand, in the pore forming apparatus 10 of the first embodiment, since the resistor R1_301 is provided (the resistor R1_301 has a resistance sufficiently larger than the wiring resistance and the resistance of the solution and the resistance is 100 GQ or less, for example), it is possible to measure the change in voltage applied to the membrane 101 before and after the nanopore is formed in the membrane, as described later. That is, the principle of detecting pore formation is fundamentally different between Comparative Example and the technique according to the embodiments.

### <Pore Forming Control Operation>

### (i) Control Example 1

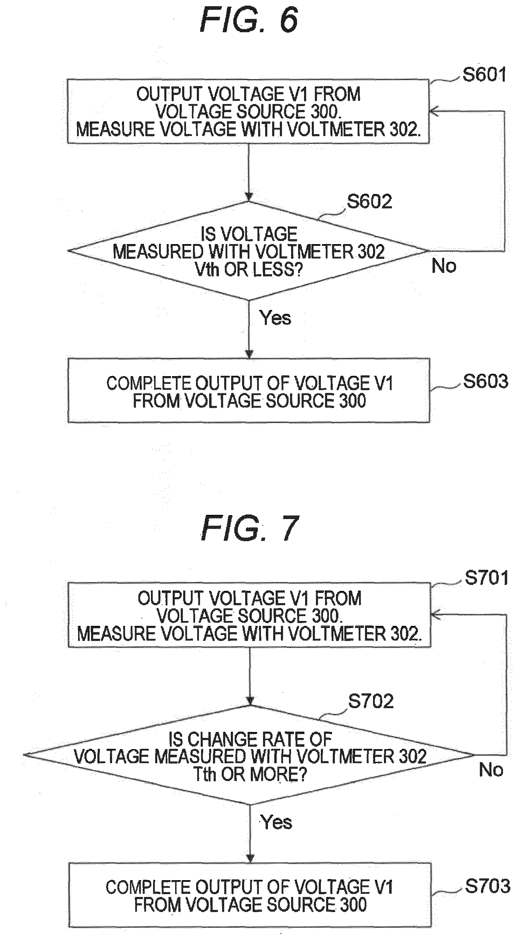

FIG. 6 is a flowchart for describing an example of pore forming operation according to the first embodiment. The pore forming operation will be described assuming that the operation subject of each of the following steps is, for example, a control system/PC 600 and a part of a control circuit 500 (see FIG. 19, hereinafter referred to as control unit).

The control unit instructs the voltage source 300 to output the voltage V1, and at the same time, monitors the voltage applied to the membrane 101 and measured by the voltmeter 302 (Step 601). Then, the control unit determines whether the voltage measured by the voltmeter 302 is less than or equal to a predetermined threshold Vth as needed (Step 602). When the voltage measured by the voltmeter 302 is not less than or equal to the threshold voltage Vth (No in Step 602: more than the threshold voltage Vth), the control unit causes the process to proceed to Step 601. The control unit controls the pore forming apparatus 10 to continue the output of the voltage V1 from the voltage source 300. and the voltage measurement with the voltmeter 302. When the voltage measured by the voltmeter 302 is less than or equal to the threshold voltage Vth (Yes in Step 602), the control unit completes the output of the voltage V1 from the voltage source 300 (Step 603). In the first embodiment, the voltage source 300 is controlled to stop the output of the voltage. A switch may be provided in the pore forming apparatus 10, and the switch may be turned off, as in a second embodiment described later. Step 601 is also performed during Step 602.

### (ii) Control Example 2

FIG. 7 is a flowchart for describing another example of pore forming operation according to the first embodiment.

The control unit instructs the voltage source 300 to output the voltage V1, and at the same time, monitors the voltage applied to the membrane 101 and measured by the voltmeter 302 (Step 701). The control unit determines whether the change rate of the voltage measured by the voltmeter 302 is more than or equal to a predetermined threshold Tth as needed (Step 702). When the change rate of the voltage measured by the voltmeter 302 is not more than or equal to the threshold Tth (No in Step 702), the control unit causes the process to proceed to Step 701. The control unit controls the pore forming apparatus 10 to continue the output of the voltage V1 from the voltage source 300 and the voltage measurement with the voltmeter 302. When the change rate of the voltage measured by the voltmeter 302 is more than or equal to the threshold Tth (Yes in Step 702), the control unit completes the output of the voltage V1 from the voltage source 300. Here, the change rate of the voltage is defined as |dv/dt|. The difference dV denotes a difference between the voltage measurement values of the nth point and the (n - 1)th point. The difference dt denotes a difference between the time when the nth point is measured and the time when the (n - 1)th point is measured. Step 701 is also performed during Step 702.

### <Change in Voltage Applied to Membrane 101: Corresponding to Control Example 1 (FIG. 6)>

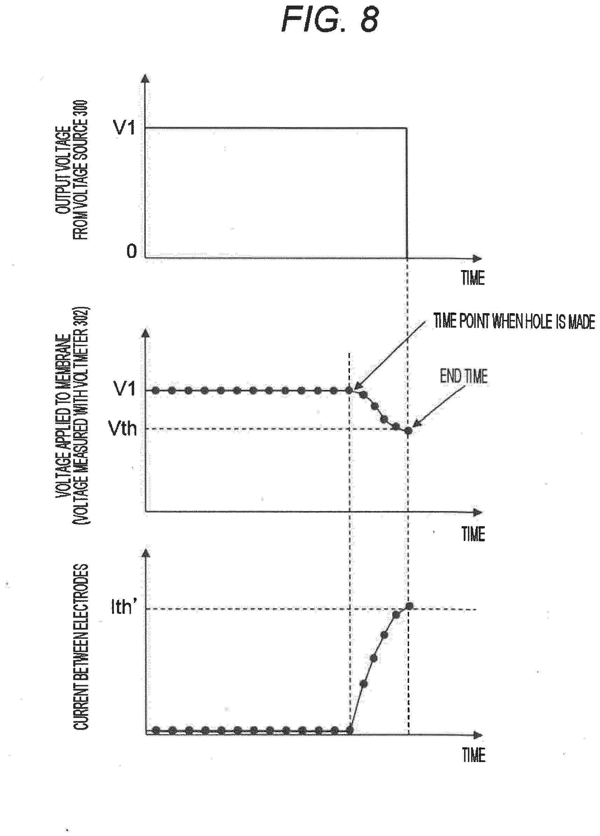

FIG. 8 is a diagram showing a time trace of an output voltage from the voltage source 300 and a time trace of the voltage applied to the membrane 101 (that is, the voltage measured by the voltmeter 302) when performing pore forming according to the first embodiment. FIG. 8 also shows a graph of the current between electrodes and the time. However, it is not necessary to measure the current between electrodes in the present embodiment. The graph of the current between electrodes and the time is merely shown as a reference.

Since a current cannot pass through the membrane 101 until a nanopore is formed in the membrane 101, the membrane 101 can be regarded as a resistance having a size of ∞ Ω in the pore forming apparatus 10 illustrated in FIG. 5. Thus, the voltage V1 output from the voltage source 300 is applied substantially only to the membrane 101. Thus, as illustrated in FIG. 8, the voltage applied to the membrane 101 is V1 until a hole is made, and the voltage is substantially constant regardless of time.

On the other hand, after a nanopore is formed in the membrane 101, the resistance of the nanopore becomes finite. The magnitude of the resistance is determined according to the size of the pore. When the resistance of the nanopore is denoted by Rp (d, t) (d denotes the nanopore diameter and t denotes the time), the voltage applied to the membrane 101 is derived from the formula V1 × (Rp/(R1 + Rp)) according to Kirchhoff's laws. In short, when a pore is formed in the membrane 101, the voltage applied to the membrane 101 automatically decreases. Then, after the pore is formed in the membrane 101, a current flows through the pore, and Joule heat is generated, which increases the size of the nanopore. Since the resistance Rp decreases as the size of the nanopore increases, the voltage applied to the membrane 101 further decreases according to the above formula. When the voltage measured by the voltmeter 302 becomes less than or equal to the predetermined threshold Vth, the application of the voltage V1 from the voltage source is stopped, and the nanopore forming is completed. Using this method can form nanopores having such a size that the current passing through the pore when the voltage Vth is applied to the membrane (pore) becomes about a threshold current value Ith' derived from Ith' = (V1 - Vth)/R1 with reduced size variations as compared with Comparative Example.

### <Reason of Small Variation in Pore Size>

The reason of small variation in the size of the formed nanopores will be described below. According to the method of the present embodiment, the voltage applied to the membrane 101 (after pore formation) starts to decrease from the time point when the nanopore is generated in the membrane 101 (because the resistor R1_301 is inserted). In addition, as the generated pore expands, the voltage applied to the membrane (pore) 101 gradually decreases.

In contrast, in Comparative Example described above, the voltage applied to the nanopore is the same before and after the nanopore is formed in the membrane 101 (because the resistor R1_301 is not inserted). Thus, the voltage applied to the nanopore does not decrease after the nanopore is formed. Here, considering that Joule heat, which is a factor of pore expansion, is derived from the formula (current passing through the nanopore) × (voltage applied to the nanopore), in the present embodiment, the voltage applied to the pore decreases after the pore is formed. Thus, the increase in Joule heat at the time of pore expansion is gradual as compared with Comparative Example. The gradual increase in Joule heat at the time of pore expansion means that the pore expansion speed is slow. When the pore expansion speed is slow, the voltage applied to the membrane does not greatly fall below the predetermined threshold Vth. Therefore, the probability of formation of a pore larger than expected is reduced. Thus, the variation in size of nanopores to be formed is reduced.

When it is desired to form a nanopore having such a size that the current passing through the pore becomes about the current value Ith' when the voltage Vth is applied to the membrane 101 with small variation, it is considered that the application voltage may be set to Vth and the threshold current may be set to Ith' using Comparative Example. However, in such a case, the voltage Vth applied to the membrane 101 until a pore opens in the membrane 101 is lower than the voltage V1. Accordingly, the time taken until a pore opens in the membrane 101 is longer than that in the method of the present embodiment. Thus, the use of the method of the present embodiment is better in that nanopores with small variation in size can be formed in a shorter time.

Comparative Example is a method of forming a nanopore having a size such that the magnitude of the current value between electrodes becomes about the threshold current value Ith with application of the voltage V1. On the other hand, in the present, embodiment, in a case where it is desired to form a pore with which the current Ith flows when the voltage V1 is applied to the membrane 101, the threshold current value Vth may be set according to the formula Vth = V1 × Ith'/Ith = V1 × V1/(Ith(R1 + Rp)) (since the formula V1 = Ith × Rp and Vth = Ith' × Rp hold according to Ohm's law, the formula Vth/V1 = Ith'/Ith holds, and the formula Vth = V1 × Ith'/Ith holds). That is, in the first embodiment, in a case where it is desired to cause the current Ith to flow in the circuit when the voltage V1 is applied to the membrane 101, the threshold voltage Vth may be set based on the above formula in consideration of the effect of the resistor R1 since the resistor R1_301 is provided in the circuit. Therefore, in the first embodiment, a pore can be formed in the membrane 101, with which the current Ith flows when the voltage V1 is applied.

### <Change in Voltage Applied to Membrane 101: Corresponding to Control Example 2 (FIG. 7)>

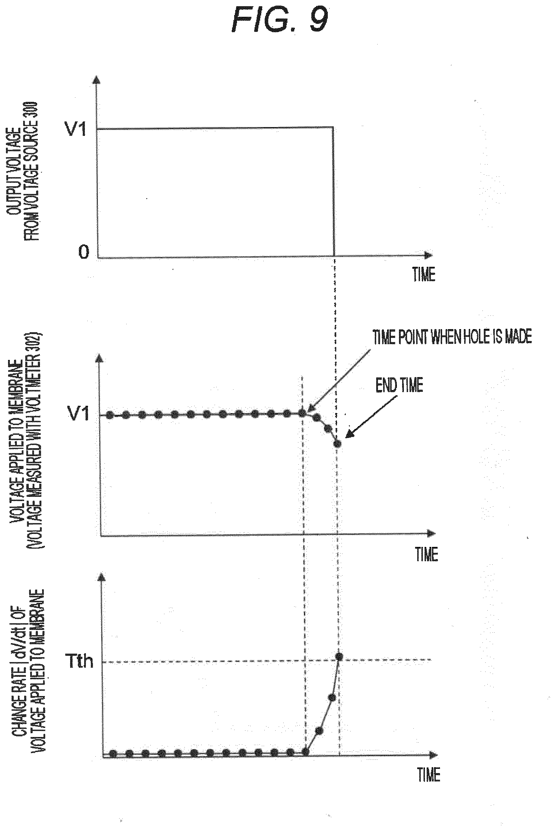

FIG. 9 is a diagram showing a time trace of the output voltage from the voltage source 300, a time trace of the voltage applied to the membrane 101, and a time trace of a change rate of the voltage in a case where a following control is executed: the voltage application from the voltage source 300 is stopped when the change rate of the voltage applied to the membrane 101 has a value more than or equal to a predetermined threshold.

As described above, in the present embodiment, the voltage applied to the membrane 101 is substantially constant (the voltage V1) until a pore opens. After a pore opens, the voltage applied to the membrane (pore) 101 decreases as the pore expands. Then, when the value of |dV/dt| becomes more than or equal to the threshold Tth, the output of the voltage V1 from the voltage source 300 is stopped to form a desired nanopore. In this method, by setting the threshold Tth to be small, the steps of nanopore forming can be completed before the pore rapidly expands. Thus, it is possible to form smaller nanopores.

### <Example 1>

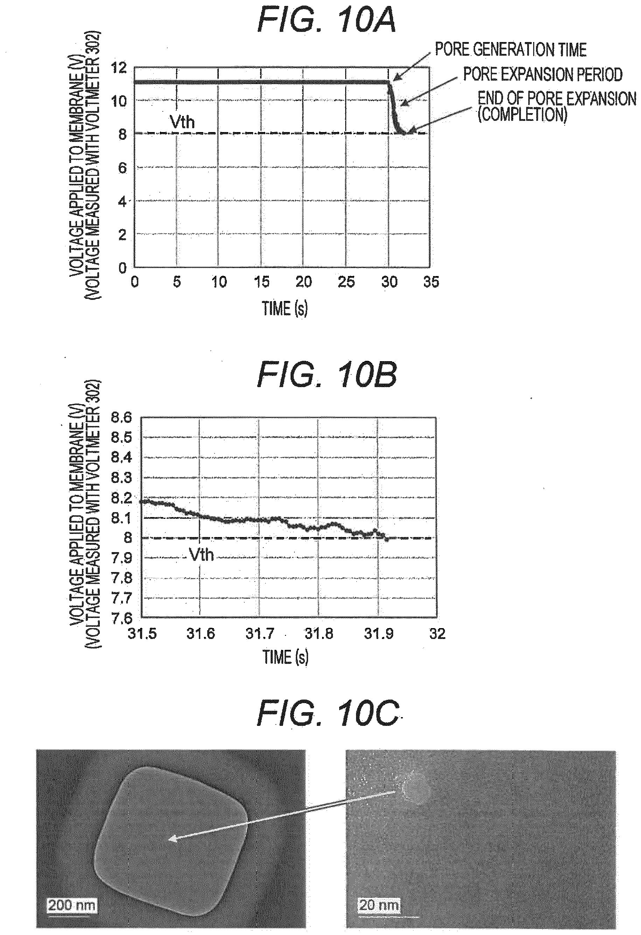

FIG. 10 is a diagram showing an example (Example 1) of experimental results according to the first embodiment. In Example 1, an experiment was performed with a SiN membrane having a thickness of 14 nm as the membrane 101 and the application voltage V1 = 11.1 V. FIG. 10A is a diagram showing experimental results with the threshold voltage Vth = 8 V and the resistance R1 = 5 MΩ. The voltage applied to the membrane measured by the voltmeter 302 started to decrease from the time point when the pore was generated in the membrane. The output of the voltage V1 from the voltage source 300 was stopped at the time when the voltage became less than or equal to the threshold voltage Vth.

FIG. 10B is an enlarged view of FIG. 10A in the vicinity of the time when the voltage reaches the threshold voltage Vth. From FIG. 10B, it can be seen that the voltage applied to the membrane 101 at the last measurement point has a value substantially equal to the threshold voltage Vth, and the voltage was not significantly below the threshold. Thus, in Example 1, the variation in size of the formed nanopores is small.

FIG. 10C is a TEM photograph of a nanopore formed in Example 1. The formation conditions were as follows: a SiN membrane of 14 nm was used as the membrane, the voltage V1 was set to V1 = 11.1_V, the threshold voltage Vth was set to Vth = 10 V, and the resistance R1 was set to R1 = 5 MΩ. The view (photograph) on the left side of FIG. 10C is an overall view of the membrane 101. The view (photograph) on the right side is an enlarged view of a nanopore part. From the left photograph, a single nanopore can be seen in the membrane. The diameter d obtained by calculating back from the area of the nanopore in the right TEM photograph was about 8 nm according to the formula d = 2 × (S/n) ^ (1/2).

### <Example 2>

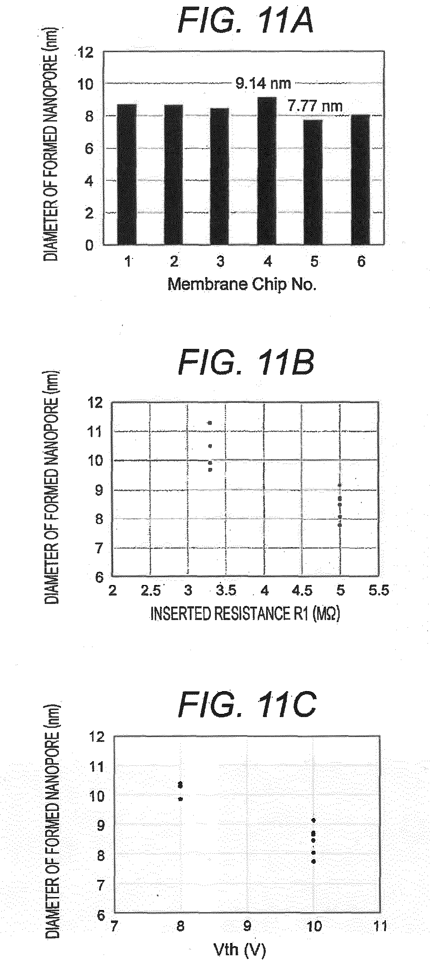

FIG. 11A is a graph showing diameters of nanopores formed when nanopore forming is performed six times in Example 2. The pore formation conditions in Example 2 were as follows: a SiN membrane having a thickness of 14 nm was used as the membrane 101, the voltage V1 was set to V1 = 11.1 V, the threshold voltage Vth was set to Vth = 10 V, and the resistance R1 was set to R1 = 5 MΩ.

According to the results of the experiment (Example 2) , the minimum diameter was 7.77 nm, and the maximum diameter was 9.14 nm. When these results are compared with the results of Comparative Example shown in FIG. 4B, it can be seen that the variation in size of the formed pores is small.

FIG. 11B is a diagram showing a resistance R1 dependence of the diameter of formed nanopores. The pore formation conditions were the same as in FIG. 11A: a SiN membrane of 14 nm was used as the membrane 101, the voltage V1 was set to V1 = 11.1 V, and the threshold voltage Vth was set to Vth = 10 V. According to FIG. 11B, a larger nanopore can be formed by lowering the resistance value of the resistor to be inserted.

FIG. 11C is a diagram showing a threshold voltage Vth dependence of the diameter of formed nanopores. The pore formation conditions were the same as in FIGS. 11A and 11B: a SiN membrane having a thickness of 14 nm was used as the membrane 101, the voltage V1 was set to V1 = 11.1 V, and the inserted resistance R1 was set to R1 = 5 MΩ. According to FIG. 11 C, it can be seen that a larger nanopore can be formed by lowering the value of the threshold voltage Vth.

### <Ranges of V1, R1, and Vth>

As a result of intensive efforts and studies on the technique according to the first embodiment, the researchers of the present technique have identified the preferable conditions of the voltage V1, the resistance R1, and the threshold voltage Vth in pore forming as follows.

For the range of the voltage V1, the value derived from the voltage V1/(the membrane thickness of the membrane 101) is preferably 0.1 V/nm or more and 10 V/nm or less, for example. It was found that it takes a very long time to form nanopores with dielectric breakdown when the voltage V1 is below this range. On the other hand, it was found that the speed at which the pore expands is high and it becomes difficult to control the pore expansion when the voltage V1 exceeds this range.

The resistor R1 desirably has a resistance sufficiently larger than at least the wiring resistance and the resistance of the aqueous solution (for example, larger by one digit or more), and 100 GΩ or less, for example. It was found that when the value of the resistance is larger than 100 GS2, the speed at which the pore expands is too slow, and only an extremely small hole through which detection target molecules cannot pass was formed.

The threshold voltage Vth is larger than 0 V and less than or equal to V1 - 10 mV, for example. When the threshold voltage Vth is set in the range of V1 > Vth > V1 - 10 mV, the measured voltage may fall below the threshold voltage Vth even before a nanopore is formed because of noise during the measurement. There is a possibility that it is erroneously determined that a nanopore is opened although no nanopore is actually opened. Thus, it was found that the above range is suitable.

The material of the membrane on which the nanopore is formed may be an insulating membrane material represented by SiN, SiO₂, SiON, HfO₂, or the like, a two-dimensional material, such as MoS₂ or graphene, or a material formed of a compound of these materials, for example. The material of the membrane may be a biomolecular material, such as a lipid bilayer membrane. Of course, the material of the membrane is not limited to the above materials.

As the aqueous solution, an aqueous solution in which HCl, KCl, NaCl, LiCl, RbCl, CsCl, MgCl₂, CaCl₂, or the like is dissolved may be used, for example. Of course, an aqueous solution (electrolyte solution) in which other ions are dissolved may be used.

### (3) Second Embodiment

The nanopore forming technique according to a second embodiment can also solve the problem of Comparative Example. Hereinafter, the second embodiment will be described.

### <Configuration Example of Pore Forming Apparatus 20>

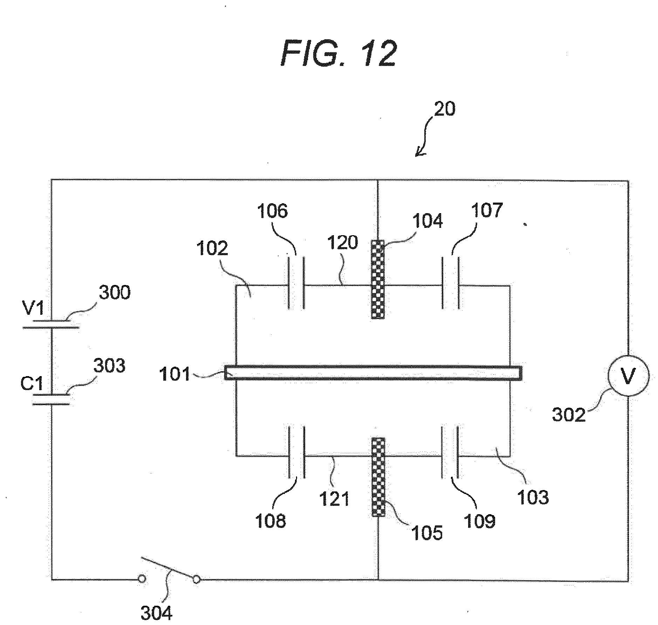

FIG. 12 is a diagram illustrating a configuration example of a pore forming apparatus 20 (setup) according to the second embodiment.

In the pore forming apparatus 20, the voltage source 300 and a capacitor (C1) 303 are arranged in series in the wiring connecting both electrodes 104 and 105. The voltmeter 302 is disposed between the electrodes to measure the voltage (voltage applied to the membrane 101) . Further, a switch 304 is provided between the electrode 105 (or the electrode 104) and the capacitor C1. It is possible to record a measured voltage value and execute a switching operation of the switch 304 based on information of the measured voltage value by controlling this circuit. This circuit may be controlled, for example, by using a control unit (see the configuration example of the pore forming system in FIG. 19), such as a PC or a dedicated control circuit or control unit, which are not illustrated in FIG. 12.

### <Pore Forming Control Operation>

### (i) Control Example 1

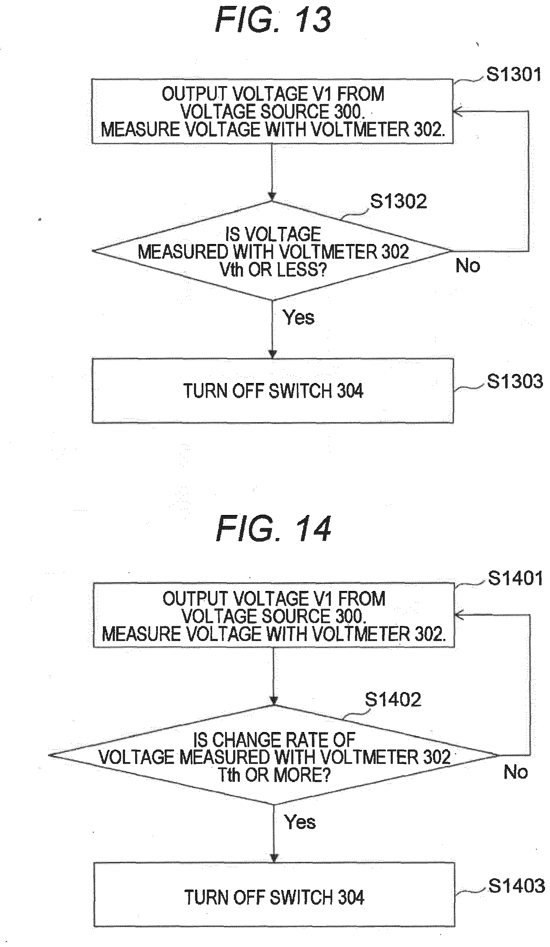

FIG. 13 is a flowchart for describing an example of pore forming operation according to the second embodiment.

The control unit instructs the voltage source 300 to output the voltage V1, and at the same time, monitors the voltage measured by the voltmeter 302 (Step 1301). Then, the control unit determines whether the voltage measured by the voltmeter 302 is less than or equal to a predetermined threshold Vth as needed (Step 1302). When the voltage measured by the voltmeter 302 is not less than or equal to the threshold voltage Vth (No in Step 1302: more than the threshold voltage Vth), the control unit causes the process to proceed to Step 1301. Then the control unit controls the pore forming apparatus 20 to continue the output of the voltage V1 from the voltage source 300 and the voltage measurement with the voltmeter 302. When the voltage measured by the voltmeter 302 is less than or equal to the threshold voltage Vth (Yes in Step 1302), the control unit turns off the switch 304 (Step 1303). Step 1301 is also performed during Step 1302.

### (ii) Control Example 2

FIG. 14 is a flowchart for describing another example of pore forming operation according to the second embodiment.

The control unit instructs the voltage source 300 to output the voltage V1, and at the same time, monitors the voltage measured by the voltmeter 302 (Step 1401). Then, the control unit determines whether the change rate of the voltage measured by the voltmeter 302 is more than or equal to a predetermined threshold Tth as needed (Step 1402). When the change rate of the voltage measured by the voltmeter 302 is not more than or equal to the predetermined threshold Tth (No in Step 1402: less than the threshold Tth), the control unit causes the process to proceed to Step 1401. Then the control unit controls the pore forming apparatus 10 to continue the output of the voltage V1 from the voltage source 300 and the voltage measurement with the voltmeter 302. When the change rate of the voltage measured by the voltmeter 302 is more than or equal to the predetermined threshold Tth (Yes in Step 11402), the control unit turns off the switch 304 (Step 1403). Here, the change rate of the voltage is defined as |dV/dt|. The difference dV denotes a difference between the voltage measurement values of the nth point and the (n - 1)th point. The difference dt denotes a difference between the time when the nth point is measured and the time when the (n - 1)th point is measured. Step 1401 is also performed during Step 1402.

### <Change in Voltage Applied to Membrane 101: Corresponding to Control Example 1 (FIG. 13)>

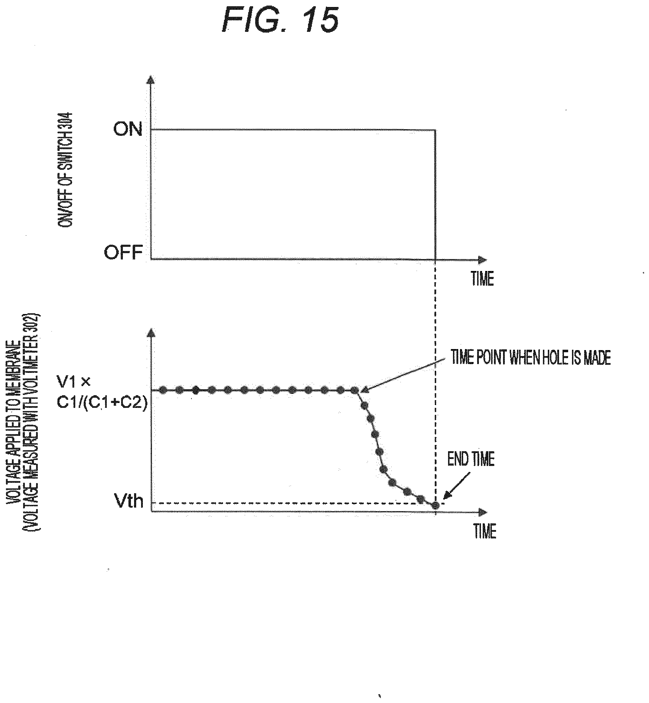

FIG. 15 is a diagram showing a time trace of ON/OFF timing of the switch 304 when performing pore forming according to the second embodiment.

Since the resistance value of the membrane is ∞ until a nanopore is formed in the membrane, the membrane 101 functions as a capacitor. The capacitance value of this capacitor is defined as C2. The capacitance C2 depends on the membrane thickness and the wet area of the membrane 101. Thus, the voltage applied to the membrane 101 (that is, the voltage measured by the voltmeter 302) is derived from the formula V1 × C1/(C1 + C2) until a nanopore is formed in the membrane 101.

After a nanopore is formed in the membrane 101, a current can pass through the nanopore. Thus, the membrane 101 no longer functions as a capacitor. The charges accumulated in the membrane 101 flow into the capacitor C1, and the voltage applied to the membrane 101 (that is, the voltage measured by the voltmeter 302) gradually decreases. That is, the voltage applied to the membrane 101 starts to decrease from the time point when the pore is opened. Thereafter, when the voltage applied to the membrane 101 (that is, the voltage measured by the voltmeter 302) becomes less than or equal to the predetermined threshold Vth, the switch 304 is controlled to be OFF, and the steps of nanopore forming is completed.

In the second embodiment, the size of the nanopore formed in the membrane 101 can be changed by changing the value of the capacitance C1. Increasing the value of the capacitance C1 increases the size of the nanopore to be formed. Changing the threshold Vth also changes the size of the nanopore to be formed. The lower the threshold Vth to be set, the larger the nanopore can be formed. As a feature of the present embodiment, when the voltage V1, the capacitance C1, the threshold voltage Vth, and the capacitance C2 of the membrane 101 are constant, the amount of charges passing through the nanopore until the formation of the nanopore is completed is constant every time without being different for each trial. Thus, the variation in size of the nanopores to be formed also decreases.

According to the present embodiment, the voltage applied to the membrane 101 (pore) starts to decrease from the time point when the nanopore is generated in the membrane 101. In addition, as the generated pore expands, the voltage applied to the membrane (pore) 101 keeps decreasing.

On the other hand, in Comparative Example described above, the voltage applied to the nanopore is the same before and after the nanopore is formed in the membrane 101 (since the resistor R1 (first embodiment) or the capacitor C1 (second embodiment) is not provided). Thus, the voltage applied to the nanopore does not decrease after the nanopore is formed. Here, Joule heat, which is a factor of pore expansion, can be expressed as the formula (current passing through the nanopore) × (voltage applied to the nanopore). Thus, in the present embodiment, since the voltage applied to the pore decreases after the pore formation, the increase in Joule heat at the time of pore expansion is gradual as compared with Comparative Example. The gradual increase in Joule heat at the time of pore expansion means that the pore expansion speed is slow. When the pore expansion speed is slow, the probability (possibility) of formation of a pore larger than expected is reduced. Thus, the present embodiment can reduce variations in size of the nanopores to be formed.

### <Time Trace of ON/OFF Timing of Switch 304, Time Trace of Voltage Applied to Membrane 101, and Time Trace of Change Rate Thereof>

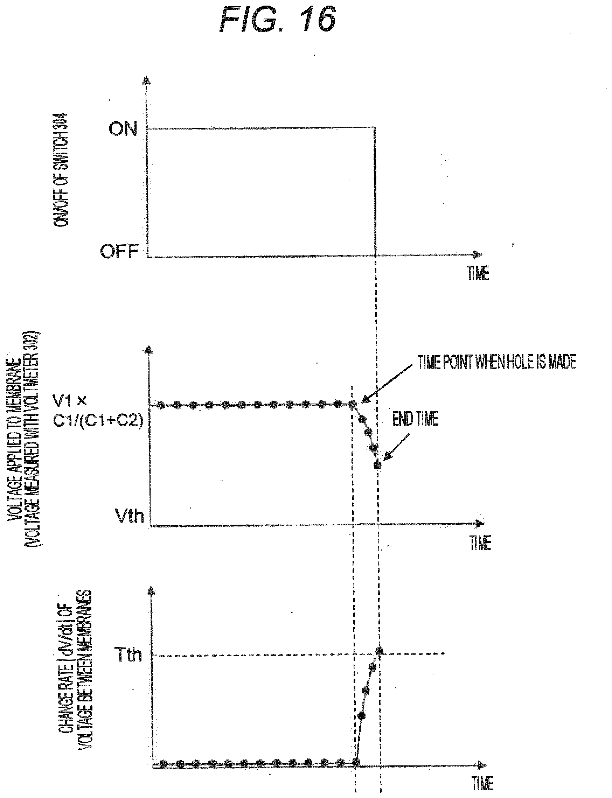

FIG. 16 is a diagram showing a time trace of an ON/OFF timing of the switch 304, a time trace of the voltage applied to the membrane 101, and a time trace of a change rate of the voltage at the time of turning off the switch 304 when the change rate of the voltage applied to the membrane 101 has a value more than or equal to a predetermined threshold (when performing the nanopore forming technique according to the present embodiment).

As described above, the voltage applied to the membrane 101 is substantially constant (V1 × C1/ (C1 + C2)) until a pore opens. After a pore opens, the voltage applied to the membrane (pore) 101 decreases. When the value of |dv/dt| becomes more than or equal to the threshold Tth, the switch 304 is turned off to form a desired nanopore. With this method, by.setting the threshold Tth to be small, the step of nanopore forming can be completed before the pore rapidly expands. Thus, it is possible to form smaller nanopores.

### <Reason of Nanopore Manufacturing Completion with Switch 304>

In the present embodiment, the nanopore manufacturing process is completed by turning off the switch 304 unlike the first embodiment in which the nanopore manufacturing process is completed by stopping the application of the voltage V1 (setting the voltage V1 to 0) . The reason for adopting such a completion method will be described below.

In the second embodiment, if the nanopore manufacturing process is terminated by setting the voltage V1 to 0 without turning off the switch 304, then the charges accumulated in the capacitor C1 flow into the nanopore at once. When the charges accumulated in the capacitor C1 flow into the nanopore at once, the pore is expanded by Joule heat caused by the charges. Consequently, a nanopore significantly larger than expected may be formed. As a result, the size of the formed nanopores varies. Thus, in the present embodiment, the switch 304 is provided instead of setting the voltage V1 to 0, and the nanopore manufacturing process is completed by turning off the switch. This allows the nanopore manufacturing process to complete without allowing the charges accumulated in the capacitor C1 to flow into the nanopore.

### <Example 3>

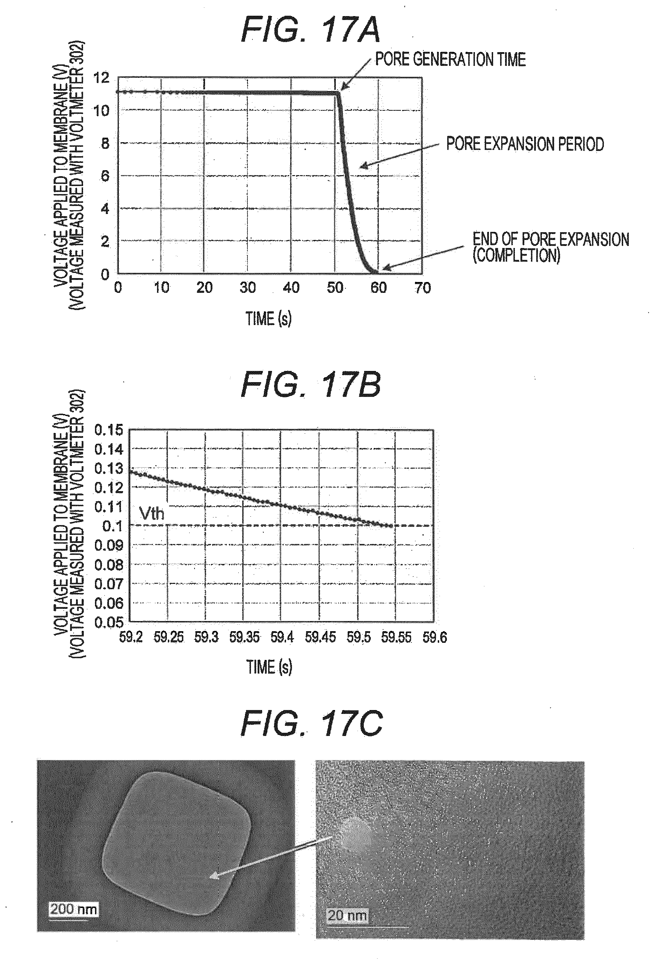

FIG. 17 is a diagram showing an example (Example 3) of experimental results according to the second embodiment. Example 3 shows experimental results with a SiN membrane having a thickness of 14 nm as the membrane 101 and the application voltage V1 = 11.5 V.

FIG. 17A shows the results with the threshold voltage Vth set to Vth = 0.1 V and the capacitance of the capacitor C1 set to C1 = 33 nF. The voltage applied to the membrane measured by the voltmeter 302 started to decrease from the time point when a pore is generated in the membrane 101. The switch 304 was turned off when the voltage became less than or equal to the threshold voltage Vth.

FIG. 17B is an enlarged view of FIG. 17A in the vicinity of the time when the voltage reaches the threshold voltage Vth. From FIG. 17B, it can be seen that the voltage applied to the membrane 101 at the last measurement point has a value substantially equal to the threshold voltage Vth. The voltage was not significantly below the threshold. Thus, the method according to the third embodiment can reduce variations in size of the nanopores to be formed.

FIG. 17C is a TEM photograph of a nanopore formed in Example 3. The formation conditions were as follows: a SiN membrane having a thickness of 14 nm was used as the membrane 101, the voltage V1 was set to V1 = 11.5 V, the threshold voltage Vth was set to Vth = 0.1 V, and capacitance of the capacitor C1 was set to C1 = 33nF. The photograph on the left side of FIG. 17C is an overall view of the membrane. The photograph on the right side of FIG. 17C is an enlarged view of a nanopore part. From the left photograph, a single nanopore can be seen in the membrane. The diameter d obtained by calculating back from the area of the nanopore in the right TEM photograph is about 8 nm according to the formula d = 2 × (S/n) ^ (1/2).

### <Example 4>

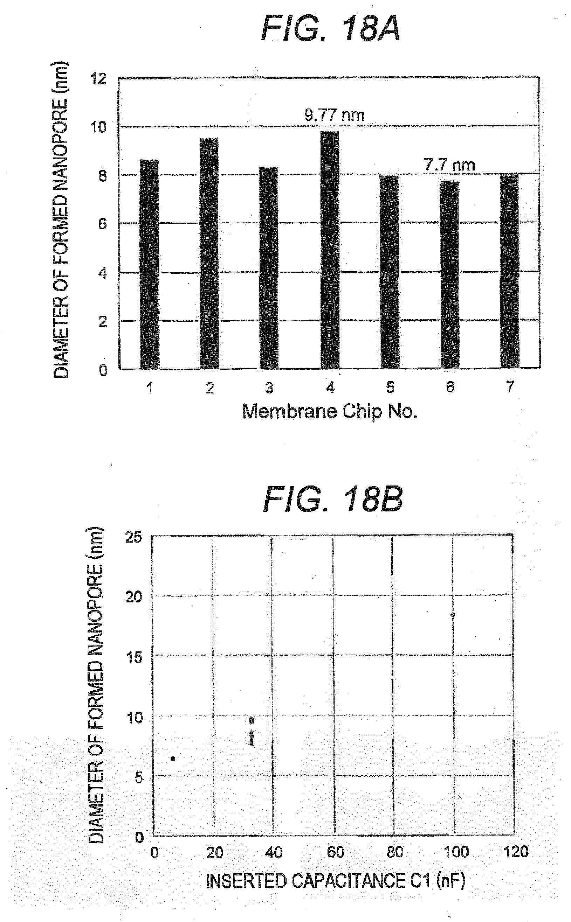

FIG. 18A is a graph showing diameters of nanopores formed when nanopore forming is performed seven times in Example 4. The pore formation conditions were as follows: a SiN membrane having a thickness of 14 nm was used as the membrane 101, the voltage V1 was set to V1 = 11.5 V, threshold voltage Vth was set to Vth = 0.1 V, and capacitance of the capacitor C1 was set to C1 = 33nF. As seen from FIG. 18A, the smallest diameter was 7.7 nm and the largest diameter was 9.77 nm. It can be seen that the variation in size of the formed pores is small as compared with the results of Comparative Example shown in FIG. 4B.

FIG. 18B shows a capacitance C1 dependence of the nanopores formed in Example 4. The pore formation conditions were as follows: a SiN membrane of 14 nm was used as the membrane 101, the voltage V1 was set to V1 = 11.5 V, and the threshold voltage Vth was set to Vth = 0.1 V. According to FIG. 18B, a larger nanopore can be formed by increasing the value of the capacitance of the capacitor to be inserted.

### <Ranges of V1, R1, and Vth>

As a result of intensive efforts and studies on the technique according to the second embodiment, the researchers of the present technique have identified the preferable conditions of the voltage V1, the resistance R1, and the threshold voltage Vth in pore forming as follows.

First, it was found that the value of V1 × C1/(C1 + C2)/(membrane thickness of membrane) was preferably in the range of 0.1 V/nm or more and 10 V/nm or less (the value may also be regarded as a value obtained by dividing the voltage applied to the membrane 101 before a pore is formed in the membrane 101 by the membrane thickness of the membrane 101, or a value obtained by dividing the voltage measured by the voltmeter 302 before a pore is formed in the membrane 101 by the membrane thickness of the membrane 101). It takes a very long time to form a nanopore with dielectric breakdown when the value is below this range. On the other hand, the speed at which the pore expands is high and it becomes difficult to control the pore expansion when the value exceeds this range.

In addition, it was also found that the threshold voltage Vth is desirably 0 V or more and V1 × C1/(C1 + C2) - 10 mV or less. The value of V1 × C1/(C1 + C2) may also be regarded as the voltage applied to the membrane 101 before a pore is formed in the membrane 101 or the voltage measured by the voltmeter 302 before a pore is formed in the membrane 101. Here, by contrast, when the threshold voltage Vth is set in the range of V1 × C1/(C1 + C2) > Vth > V1 × C1/(C1 + C2) - 10 mV, the measured voltage may be lower than the threshold voltage Vth even before a nanopore is formed because of noise at the time of measurement. Thus, there is a possibility that it is erroneously determined that a nanopore is opened although no nanopore is actually opened. Thus, the threshold voltage Vth is desirably 0 V or more and V1 × C1/(C1 + C2) - 10 mV or less.

The material of the membrane 101 in which the nanopore is formed may be an insulating membrane material represented by SiN, SiO₂, SiON, HfO₂, or the like, a two-dimensional material, such as MoS₂ or graphene, or a material formed of a compound of these materials, for example. The material of the membrane may be a biomolecular material, such as a lipid bilayer membrane. Of course, the material of the membrane is not limited to the above materials.

In the pore forming apparatus 20, an aqueous solution in which HCl, KCl, NaCl, LiCl, RbCl, CsCl, MgCl₂, CaCl₂, or the like is dissolved may be used as the aqueous solution, for example. Of course, an aqueous solution (electrolyte solution) in which other ions are dissolved may be used.

### (4) Configuration Example of Pore Forming System That May Be Used in Each Embodiment

FIG. 19 is a diagram illustrating a configuration example of a pore forming system used in the first and second embodiments.

A user inputs values necessary for performing the nanopore forming method, such as the output voltage value V1 from the voltage source 300, the values of the thresholds Vth and Tth, the resistance R1, and the value of the capacitance C1, to the control system/PC 600 constituting a part of the pore forming system. The parameter information is transmitted from the control system/PC 600 to the control circuit 500. The control circuit 500 executes nanopore formation processing according to the present embodiment by reflecting these parameters.

The control circuit 500 includes the voltage source 300, the voltmeter 302, the resistor R1, the capacitor C1, and the switch 304. The resistor R1 and the capacitor C1 may be composed of a variable resistor and a variable capacitor. This makes it possible to take various values of resistance and capacitance. The size of the nanopore formed in the membrane 101 may be adjusted by changing the resistor R1 and the capacitor C1 as described above. Thus, the more the possible values of the resistance of the resistor R1 and the capacitance of the capacitor C1 can take, the more finely the size of the nanopore to be formed can be adjusted.

The control system/PC 600 may store in advance the relationship between the size of the pore and the magnitude of the current value flowing when a voltage is applied to the pore as a database for each membrane thickness or material of the membrane 101. With reference to the database, after forming a nanopore by the method according to the present embodiment, the user applies a voltage to the formed pore and observes the current value flowing at that time and can find out the size of the nanopore by the current value.

Further, the control system/PC 600 may be provided with a storage unit (database) that stores dependency of the size of the pore to be formed on each parameter (the output voltage value V1 from the voltage source 300, the resistance R1 in the circuit, the capacitance C1, the threshold values Vth and Tth, the material and membrane thickness of the membrane 101, and the like) in advance. With such a database, for example, in a case where the user desires to form a nanopore having a certain size in a membrane of a certain material and a certain membrane thickness, the user can find out what values of the output voltage, the resistance R1, the capacitance C1, and the threshold values Vth and Tth should be set. It is also possible, for example, the user may input the size of the nanopore desired to be formed and the membrane thickness and material of the membrane 101 used for forming the nanopore to the control system/PC 600. Thereafter, the control system/PC 600 may automatically extract values of the output voltage V1, the resistance R1, the capacitance C1, and the threshold values Vth and Tth suitable for nanopore forming from the database. Then, the control system/PC 600 may cause the control circuit to operate based on the extracted values to form the nanopore.

### (5) Conclusion

(i) In a pore forming apparatus according to the first embodiment, a first electrolyte solution and a second electrolyte solution are held in a chamber configuration (the chamber configuration may be divided into a first chamber and a second chamber, or one chamber may be partitioned by a membrane). A membrane is disposed between the first electrolyte solution and the second electrolyte solution. A first electrode is brought into contact with the first electrolyte solution, and a second electrode is brought into contact with the second electrolyte solution. A first voltage is output from a voltage source to a circuit configured by disposing the voltage source and a resistor in a wiring connecting the first electrode and the second electrode (a constant voltage V1 is applied). A second voltage between the first electrode and the second electrode is measured.

The pore forming apparatus stops output of the first voltage when the second voltage reaches or falls below a predetermined voltage threshold (for example, it may be set to 0 V < the voltage threshold < (the first voltage - 10 mV)). Or, the pore forming apparatus stops output of the first voltage (power supply) when a change rate of the second voltage reaches or exceeds a predetermined change rate threshold. A pore is formed in the membrane through such a procedure. A pore of a desired size can be formed in the membrane by adjusting (specifying) the predetermined voltage value or the predetermined change rate.

The first voltage/membrane thickness may be 0.1 V/nm or more and 10 V/nm or less. Since the resistance value of the membrane is infinite before a change occurs in the value of the second voltage, the second voltage/membrane thickness is 0.1 V/nm or more and 10 V/nm or less. Further, the resistance value of the resistor disposed in the circuit is sufficiently larger than the resistance of the first electrolyte solution and the resistance of the second electrolyte solution, and the value may be 100 GO or less.

(ii) In a pore forming apparatus according to the second embodiment, a first electrolyte solution and a second electrolyte solution are held in a chamber configuration (the chamber configuration may be divided into a first chamber and a second chamber, or one chamber may be partitioned by a membrane). A membrane is disposed between the first electrolyte solution and the second electrolyte solution. A first electrode is brought into contact with the first electrolyte solution, and a second electrode is brought into contact with the second electrolyte solution. A first voltage is output from a voltage source to a circuit configured by disposing the voltage source, a capacitor, and a switch in a wiring connecting the first electrode and the second electrode (a constant voltage V1 is applied). A second voltage between the first electrode and the second electrode is measured.

The pore forming apparatus turns off the switch when the second voltage reaches or falls below a predetermined voltage threshold. Or, the pore forming apparatus turns off the switch when a change rate of the second voltage reaches or exceeds a predetermined change rate threshold. A pore is formed in the membrane through such a procedure. A pore of a desired size can be formed in the membrane by adjusting (specifying) the predetermined voltage value or the predetermined change rate.

Meanwhile, the value derived from the following formula, the first voltage × capacitance of the capacitor/(capacitance between the first and second electrodes across the membrane + capacitance of the capacitor)/the membrane thickness, may be 0.1 V/nm or more and 10 V/nm or less. The second voltage/membrane thickness is 0.1 V/nm or more and 10 V/nm or less before a change occurs in the value of the second voltage. Further, the predetermined voltage threshold is 0 V or more and {the first voltage × capacitance of the capacitor/(capacitance between the first and second electrodes across the membrane + capacitance of the capacitor) - 10 mV} or less. Here, {the first voltage × capacitance of the capacitor/(capacitance between the first and second electrodes across the membrane + capacitance of the capacitor) - 10 mV} means the value of the second voltage before a change occurs in the value of the second voltage - 10 mV.

(iii) The functions of the embodiments may also be realized by a software program code. In this case, a storage medium in which the program code is recorded is provided to a system or an apparatus. A computer (or a CPU or an MPU) of the system or the apparatus reads out the program code stored in the storage medium. In this case, the program code itself read out from the storage medium realizes the functions of the above-described embodiments. The program code itself and the storage medium storing the program code constitute the present disclosure. As the storage medium for supplying such a program code, a flexible disk, a CD-ROM, a DVD-ROM, a hard disk, an optical disk, a magnetooptical disk, a CD-R, a magnetic tape, a nonvolatile memory card, a ROM, or the like is used, for example.

An operating system (OS) or the like running on the computer may perform part or all of actual processing based on an instruction of the program code, and the functions of the above-described embodiments may be realized by the processing. Further, the program code read out from the storage medium may be written in the memory on the computer. Thereafter, a CPU or the like of the computer may perform part or all of the actual processing based on an instruction of the program code, and the functions of the above-described embodiments may be realized by the processing.

Further, a program code of software that realizes the functions of the embodiments may be distributed via a network. The distributed program code may be stored in a storage unit such as a hard disk or a memory of a system or an apparatus, or a storage medium such as a CD-RW or a CD-R. Then a computer (or a CPU or an MPU) of the system or the apparatus may read out and execute the program code stored in the storage unit or the storage medium at the time of use.

Finally, the processes and techniques described herein are not inherently related to any particular apparatus and can be implemented by any suitable combination of components. Further, various types of general-purpose devices may be used according to the teaching described here. It may be beneficial to construct dedicated apparatuses to perform the steps of the methods described herein. In addition, various inventions may be established by appropriately combining a plurality of constituent elements disclosed in the embodiments. For example, some constituent elements may be deleted from all the constituent elements described in the embodiments. Further, constituent elements of different embodiments may be appropriately combined. The present disclosure has been described in connection with specific examples. These examples are not for limitation in all respects, but for explanation. Those skilled in the art will recognize that there are numerous combinations of hardware, software, and firmware suitable for implementing the present disclosure. For example, the described software may be implemented in a wide range of programs or script languages, such as assembler, C/C++, perl, Shell, PHP, and Java (registered trademark).

In the embodiments described above, illustrated control lines and information lines are considered to be necessary for description, and not all control lines and information lines in a product are necessarily illustrated. All the configurations may be connected to each other.

### Reference Signs List

101 membrane (SiN membrane)
102, 103 aqueous solution
104, 105 electrode
106, 107, 108, 109 solution inlet/outlet
112 support substrate
120, 121 chamber
130, 131 o-ring
201 ammeter
300 voltage source
301 resistor
302 voltmeter
303 capacitor
500 control circuit
600 control system/PC

## Claims

1. A pore forming method comprising:
disposing a membrane between a first electrolyte solution and a second electrolyte solution;
bringing a first electrode into contact with the first electrolyte solution and a second electrode into contact with the second electrolyte solution;
outputting a first voltage from a voltage source to a circuit configured by disposing the voltage source and a resistor in a wiring connecting the first electrode and the second electrode;
measuring a second voltage between the first electrode and the second electrode;
detecting a significant change in the second voltage; and
stopping output of the first voltage in response to detecting the significant change in the second voltage.

2. The pore forming method according to claim 1, wherein
the significant change is that the second voltage reaches or falls below a predetermined voltage threshold.

3. The pore forming method according to claim 1, wherein
the significant change is that a change rate of the second voltage reaches or exceeds a predetermined change rate threshold.

4. The pore forming method according to claim 1, wherein
the first voltage/a thickness of the membrane is 0.1 V/nm or more and 10 V/nm or less.

5. The pore forming method according to claim 1, wherein
before the significant change occurs in a value of the second voltage, the second voltage/a thickness of the membrane is 0.1 V/nm or more and 10 V/nm or less.

6. The pore forming method according to claim 1, wherein
the resistor has a resistance value larger than a resistance of the first electrolyte solution and a resistance of the second electrolyte solution and less than or equal to 100 GΩ.

7. The pore forming method according to claim 2, wherein
the predetermined voltage threshold is more than 0 V and less than or equal to (the first voltage - 10 mV).

8. A pore forming apparatus comprising:
a membrane disposed between a first electrolyte solution and a second electrolyte solution;
a first electrode disposed to be in contact with the first electrolyte solution;
a second electrode disposed to be in contact with the second electrolyte solution;
a wiring connecting the first electrode and the second electrode;
a voltage source that is disposed in the wiring and outputs a first voltage;
a resistor disposed in the wiring;
a voltmeter that measures a second voltage between the first electrode and the second electrode; and
a control unit that detects a significant change in the second voltage and stops output of the first voltage in response to detecting the significant change in the second voltage.

9. The pore forming apparatus according to claim 8, wherein
the significant change is that the second voltage reaches or falls below a predetermined voltage threshold.

10. The pore forming apparatus according to claim 8, wherein
the significant change is that a change rate of the second voltage reaches or exceeds a predetermined change rate threshold.

11. A pore forming method comprising:
disposing a membrane between a first electrolyte solution and a second electrolyte solution;
bringing a first electrode into contact with the first electrolyte solution and a second electrode into contact with the second electrolyte solution;
outputting a first voltage from a voltage source to a circuit configured by disposing the voltage source, a capacitor, and a switch in a wiring connecting the first electrode and the second electrode;
measuring a second voltage between the first electrode and the second electrode;
detecting a significant change in the second voltage; and
turning off the switch in response to detecting the significant change in the second voltage.

12. The pore forming method according to claim 11, wherein
the significant change is that the second voltage reaches or falls below a predetermined voltage threshold.

13. The pore forming method according to claim 11, wherein
the significant change is that a change rate of the second voltage reaches or exceeds a predetermined change rate threshold.

14. The pore forming method according to claim 11, wherein
the first voltage × a capacitance of the capacitor/(a capacitance between the first and second electrodes across the membrane + the capacitance of the capacitor)/a thickness of the membrane is 0.1 V/nm or more and 10 V/nm or less.

15. The pore forming method according to claim 11, wherein
before the significant change occurs in a value of the second voltage, the second voltage/a thickness of the membrane is 0.1 V/nm or more and 10 V/nm or less.

16. The pore forming method according to claim 12, wherein
the predetermined voltage threshold is 0 V or more and {the first voltage × a capacitance of the capacitor/(a capacitance between the first and second electrodes across the membrane + the capacitance of the capacitor) - 10 mV} or less.

17. The pore forming method according to claim 12, wherein
the predetermined voltage threshold is 0 V or more and (a value of the second voltage before a change occurs in the value of the second voltage - 10 mV) or less.

18. A pore forming apparatus comprising:
a membrane disposed between a first electrolyte solution and a second electrolyte solution;
a first electrode disposed to be in contact with the first electrolyte solution;
a second electrode disposed to be in contact with the second electrolyte solution;
a wiring connecting the first electrode and the second electrode;
a voltage source that is disposed in the wiring and outputs a first voltage;
a capacitor disposed in the wiring;
a switch disposed in the wiring;
a voltmeter that measures a second voltage between the first electrode and the second electrode; and
a control unit that detects a significant change in the second voltage and turns off the switch in response to detecting the significant change in the second voltage.

19. The pore forming apparatus according to claim 18, wherein
the significant change is that the second voltage reaches or falls below a predetermined voltage threshold.

20. The pore forming apparatus according to claim 18, wherein
the significant change is that a change rate of the second voltage reaches or exceeds a predetermined change rate threshold.
